(19) Europäisches Patentamt
European Patent Office
Office européen des brevets

(11) **EP 2 329 574 B1**

(12) **EUROPÄISCHE PATENTSCHRIFT**

(45) Veröffentlichungstag und Bekanntmachung des Hinweises auf die Patenterteilung:
**28.10.2015 Patentblatt 2015/44**

(21) Anmeldenummer: **09782958.4**

(22) Anmeldetag: **14.09.2009**

(51) Int Cl.:
**H02H 1/04** (2006.01)

(86) Internationale Anmeldenummer:
**PCT/EP2009/061856**

(87) Internationale Veröffentlichungsnummer:
**WO 2010/034635 (01.04.2010 Gazette 2010/13)**

(54) **VERFAHREN UND ANORDNUNG ZUM ERZEUGEN EINES FEHLERSIGNALS**

METHOD AND ARRANGEMENT FOR GENERATING AN ERROR SIGNAL

PROCEDE ET SYSTEME POUR GENERER UN SIGNAL D'ERREUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **26.09.2008 PL 38616108**

(43) Veröffentlichungstag der Anmeldung:
**08.06.2011 Patentblatt 2011/23**

(73) Patentinhaber: **Siemens Aktiengesellschaft 80333 München (DE)**

(72) Erfinder:
• **SCHIEL, Ludwig**
  **10627 Berlin (DE)**
• **REBIZANT, Waldemar**
  **PL-53/678 Wroclaw (PL)**
• **WISZNIEWSKI, Andrzej**
  **PL-51-144 Wroclaw (PL)**

(56) Entgegenhaltungen:
**EP-A- 0 273 255**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren mit den Merkmalen gemäß dem Oberbegriff des Anspruchs 1.

Ein Verfahren der beschriebenen Art wird beispielsweise von kommerziell erhältlichen Differentialschutzgeräten bzw. Differentialschutzrelais durchgeführt. Derartige Schutzgeräte dienen dazu, im Falle eines Fehlers in einer Energieübertragungsanlage oder einem Übertragungssystemelement ein Fehlersignal zu erzeugen, das den jeweiligen Fehler anzeigt. Bei Einschaltvorgängen innerhalb der Energieübertragungsanlage können bekanntermaßen jedoch Stromspitzen und Stromverläufe auftreten, die im Normalbetrieb der Energieübertragungsanlage sonst für einen Fehler typisch sind, also auf einen Fehler innerhalb der Energieübertragungsanlage hindeuten. Aus diesem Grunde prüfen vorbekannte Schutzgeräte außerdem, ob in der Energieübertragungsanlage ein Einschaltvorgang durchgeführt wird, und blockieren das Erzeugen des Fehlersignals, solange der jeweilige Einschaltvorgang anhält. Durch das Blockieren des Fehlersignals während eines Einschaltvorgangs wird verhindert, dass Schutzalgorithmen des Schutzgeräts während eines Einschaltvorgangs ansprechen und ein Fehlersignal auslösen, obwohl tatsächlich gar kein Fehler vorliegt, sondern ein normaler Einschaltvorgang stattfindet. Verfahren zum Erzeugen von Fehlersignalen, bei denen während eines Einschaltvorganges das Erzeugen eines Fehlersignals blockiert wird, werden beispielsweise von Schutzgeräten ausgeführt, die von der Siemens AG unter dem Produktnamen 7UT631/63X vertrieben werden.

Der Erfindung liegt die Aufgabe zugrunde, ein Verfahren zum Erzeugen eines Fehlersignals anzugeben, bei dem Einschaltvorgänge besonders zuverlässig erkannt werden und das Blockieren eines Fehlersignals demgemäß ebenfalls besonders zuverlässig erfolgt.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass geprüft wird, ob zumindest ein Strom einer Energieübertragungsanlage für ein vorgegebenes Mindestzeitintervall pro Periodendauer des Stromes einen flachen Stromverlauf aufweist und das Erzeugen des Fehlersignals blockiert wird, wenn der zumindest eine Strom für das vorgegebene Mindestzeitintervall einen flachen Stromverlauf aufweist.

Ein wesentlicher Vorteil des erfindungsgemäßen Verfahrens ist darin zu sehen, dass Einschaltvorgänge von tatsächlichen inneren Fehlern innerhalb der Energieübertragungsanlage mit dem erfindungsgemäßen Verfahren sicher unterschieden werden können. Der Erfindung liegt dabei die Erkenntnis zugrunde, dass bei Einschaltvorgängen wiederholt flache Stromverläufe auftreten, nicht jedoch bei inneren Fehlern der Anlage. An dieser Stelle setzt das erfindungsgemäße Verfahren an, indem geprüft wird, ob ein solcher flacher Stromverlauf für eine vorgegebene Mindestzeitdauer bzw. ein vorgegebenes Mindestzeitintervall pro Periodendauer anhält und, falls dies der Fall ist, das Erzeugen eines Fehlersignals blockiert wird.

Bei dem im Hinblick auf seinen Stromverlauf zu überprüfenden Strom kann es sich beispielsweise um einen Differenzstrom in einem Differentialschutzrelais, um einen Leiterstrom in Abzweigen oder Transformatorseiten, einen Nullstrom, einen Sternpunktstrom eines Transformators, oder einen oder mehrere Leiterströme der Energieübertragungsanlage handeln.

Im Falle einer dreiphasigen Energieübertragungsanlage wird es als vorteilhaft angesehen, wenn an einer vorgegebenen Messstelle der Leiterstrom in jeder Phase einer dreiphasigen Leitung gemessen wird, geprüft wird, ob alle drei Leiterströme gleichzeitig für ein vorgegebenes Mindestzeitintervall pro Periodendauer des Stromes gleichzeitig einen flachen Stromverlauf aufweisen, und das Erzeugen des Fehlersignals blockiert wird, wenn alle drei Leiterströme für das vorgegebene Mindestzeitintervall gleichzeitig einen flachen Stromverlauf aufweisen.

Um ein unnötiges Blockieren des Fehlersignals besonders sicher zu vermeiden, kann beispielsweise darüber hinaus vorgesehen werden, dass das Erzeugen des Fehlersignals, nur blockiert wird, wenn alle drei Ströme für das vorgegebene Mindestzeitintervall gleichzeitig einen flachen Stromverlauf aufweisen und außerdem eine weitere Blockierbedingung erfüllt wird.

Beispielsweise wird das Erzeugen des Fehlersignals nur blockiert, wenn alle drei Ströme sowie ein Nullpunkt- und/oder Sternpunktstrom der Energieübertragungsanlage für das vorgegebene Mindestzeitintervall gleichzeitig einen flachen Stromverlauf aufweisen.

Alternativ oder zusätzlich kann vorgesehen werden, dass das Erzeugen des Fehlersignals nur blockiert wird, wenn alle drei Ströme für das vorgegebene Mindestzeitintervall gleichzeitig einen flachen Stromverlauf aufweisen und außerdem die Leiterströme jeweils einen vorgegebenen Stromschwellenwert überschreiten.

Besonders einfach und damit vorteilhaft lässt sich prüfen, ob der Strom flach verläuft oder nicht, indem der Stromverlauf als flach angesehen wird, wenn dessen zeitliche Änderung während des vorgegebenen Mindestzeitintervalls kleiner als ein Änderungsschwellenwert ist.

Der Stromschwellenwert und/oder der Änderungsschwellenwert können beispielsweise fest vorgegebenen werden. Ein noch besseres Verhalten des Schutzverfahrens wird jedoch erreicht, wenn der Stromschwellenwert und/oder der Änderungsschwellenwert variabel ist und in Abhängigkeit von zumindest einem an der Energieübertragungsanlage gemessenen Messwert ermittelt wird.

Beispielsweise können der Stromschwellenwert und/oder der Änderungsschwellenwert in Abhängigkeit von zumindest einem gemessenen Bezugsstrommesswert festgelegt werden. Vorzugsweise werden der Stromschwellenwert und/oder der Änderungsschwellenwert umso größer gewählt, je größer der Bezugsstrommesswert ist. Zum Beispiel wird als Stromschwellenwert und/oder Änderungsschwellenwert ein zu dem Bezugsstrommesswert proportionaler Wert gewählt.

Im Falle einer dreiphasigen Energieübertragungsanlage wird es als vorteilhaft angesehen, wenn pro Phase jeweils ein phasenleiterindividueller Stromschwellenwert und/oder phasenleiterindividueller Änderungsschwellenwert bestimmt und angewandt wird, wobei jeder der phasenleiterindividuellen Stromschwellenwerte und/oder Änderungsschwellenwerte vorzugsweise jeweils in Abhängigkeit von einem Bezugsstrommesswert der jeweiligen Phase bestimmt wird.

Als der Bezugsstrommesswert kann beispielsweise der maximale Stromwert gewählt werden, der in einem zeitlich vorher liegenden Bezugszeitintervall gemessen worden ist.

Falls ein Transformator geschützt werden soll, wird es als vorteilhaft angesehen, wenn das Erzeugen des Fehlersignals blockiert wird, wenn alle drei Leiterströme des Transformators für das vorgegebene Mindestzeitintervall gleichzeitig einen flachen Stromverlauf aufweisen.

Im Falle eines Transformators mit geerdetem Sternpunkt wird es als vorteilhaft angesehen, wenn das Erzeugen des Fehlersignals nur blockiert wird, falls alle drei Leiterströme sowie zusätzlich auch der Sternpunktstrom des Transformators für das vorgegebene Mindestzeitintervall gleichzeitig einen flachen Stromverlauf aufweisen.

Die Erfindung bezieht sich darüber hinaus auf ein Feldgerät, insbesondere Schutzgerät, das ein besonders gutes Schutzverhalten auch während eines Einschaltvorgangs aufweist.

Erfindungsgemäß ist diesbezüglich vorgesehen, dass das Feldgerät eine Auswerteeinrichtung aufweist, die geeignet ist, ein Verfahren, wie es oben im Detail beschrieben ist, auszuführen.

Bezüglich der Vorteile des erfindungsgemäßen Feldgerätes sei auf die obigen Ausführungen im Zusammenhang mit dem erfindungsgemäßen Verfahren verwiesen. Vorteilhafte Ausgestaltungen des erfindungsgemäßen Feldgerätes sind in Unteransprüchen angegeben.

Die Erfindung wird nachfolgend anhand von Ausführungsbeispielen näher erläutert, dabei zeigen beispielhaft

Figur 1      eine Anordnung mit einem Ausführungsbeispiel für ein erfindungsgemäßes Feldgerät,

Figur 2      ein Ausführungsbeispiel für die Arbeitsweise einer Auswerteeinrichtung des Feldgerätes gemäß Figur 1,

Figur 3      beispielhafte Stromverläufe in der Anordnung gemäß Figur 1 im Falle eines Einschaltvorgangs,

Figur 4      beispielhafte Stromverläufe in der Anordnung gemäß Figur 1 im Falle eines inneren Fehlers, also keines Einschaltvorganges, und

Figur 5      ein weiteres Ausführungsbeispiel für eine Anordnung mit einem Feldgerät.

In den Figuren werden der Übersicht halber für identische oder vergleichbare Komponenten stets dieselben Bezugszeichen verwendet.

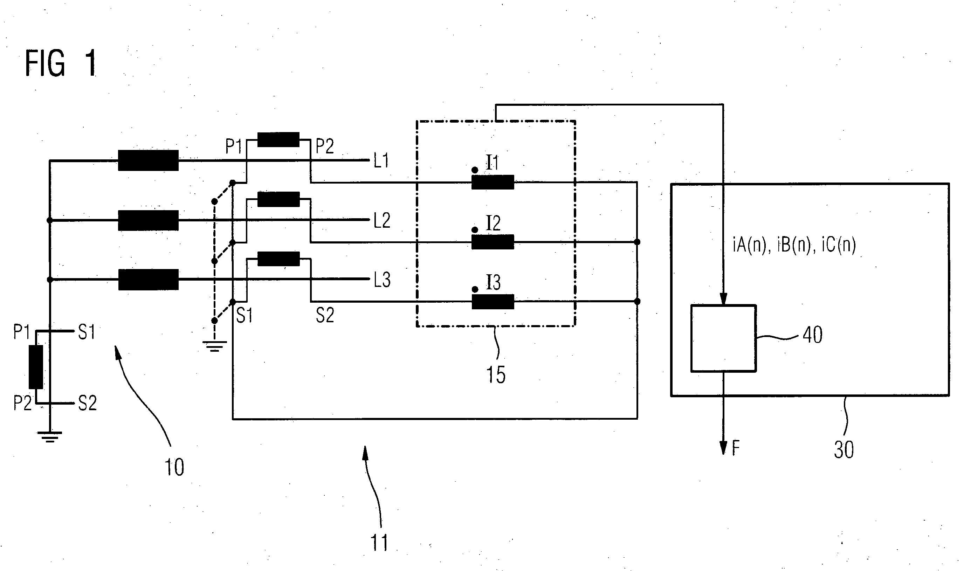

In der Figur 1 erkennt man einen Abschnitt 10 einer nicht weiter dargestellten Energieübertragungsanlage 11 (Übertragungssystemelement). Der Abschnitt 10 kann beispielsweise einen Transformator aufweisen.

An einer Messstelle 15 des Abschnitts 10 ist an drei Phasenleiter L1, L2 und L3 des Transformators ein Feldgerät 30 angeschlossen. Das Feldgerät 30 ist mit einer Auswerteeinrichtung 40 ausgestattet, zu der die Ströme I1, 12 und I3 beschreibende Strommessgrößen, bei denen es sich beispielsweise um Strommesswerte wie Stromabtastwerte $i_A(n)$, $i_B(n)$ und $i_C(n)$ handeln kann, übertragen werden. Die Auswerteeinrichtung 40 wertet die Stromabtastwerte $i_A(n)$, $i_B(n)$ und $i_C(n)$ aus und erzeugt ein Fehlersignal F, wenn ein Fehler in der Energieübertragungsanlage 11 feststellbar ist.

Die Auswerteeinrichtung 40 des Feldgerätes 30 prüft außerdem, ob ein Einschaltvorgang erkennbar ist. Im Falle eines erkannten Einschaltvorganges wird das Erzeugen des Fehlersignals F blockiert, um ein fehlerhaftes Auslösen des Feldgerätes 30 zu vermeiden.

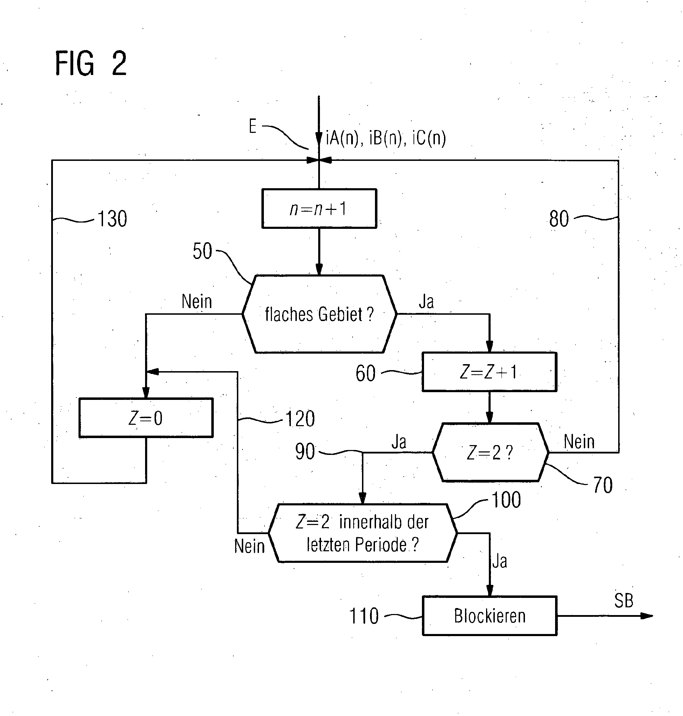

In der Figur 2 ist beispielhaft ein Ablaufdiagramm gezeigt, das ein Ausführungsbeispiel für die Arbeitsweise der Auswerteeinrichtung 40 gemäß Figur 1 zeigt. Man erkennt die Stromabtastwerte bzw. Phasenstromproben $i_A(n)$, $i_B(n)$ und $i_C(n)$, die zu einer Kurvenverlaufsprüfung 50 gelangen. Im Rahmen der Kurverlaufsprüfung 50 wird geprüft, ob die durch die Stromabtastwerte $i_A(n)$, $i_B(n)$ und $i_C(n)$ beschriebenen Leiterströme in der Energieübertragungsanlage 11 gemäß Figur 1 einen flachen Verlauf aufweisen. Dies kann beispielsweise gemäß folgender Gleichung (1) geprüft werden:

$$\left|i_A(n) - i_A(n-1)\right| \le C$$

und

$$\left|i_B(n) - i_B(n-1)\right| \le C$$

und

$$\left|i_C(n) - i_C(n-1)\right| \le C$$

wobei C einen Schwellenwert, die tiefer gestellten Indizes A, B und C die Phasenleiter und die Indizes (n) bzw. (n-1) zeitlich aufeinander folgende Abtastwerte kennzeichnen.

Alternativ kann die Prüfung, ob der Stromverlauf flach ist oder nicht, auch gemäß einer der beiden folgenden Gleichungen (2) oder (3) überprüft werden:

$$\frac{\left|\Delta i_A(n)\right|}{Ts} \le D \quad \& \quad \frac{\left|\Delta i_B(n)\right|}{Ts} \le D \quad \& \quad \frac{\left|\Delta i_C(n)\right|}{Ts} \le D \qquad (2)$$

$$di_A(n) \le D \quad \& \quad di_B(n) \le D \quad \& \quad di_{1C}(n) \le D \qquad (3)$$

wobei "&" eine logische UND-Verknüpfung, D einen vorgegebenen Schwellenwert und Ts die Abtastzeit bzw. das Abtastintervall beschreiben.

Die Schwellenwerte C und D können beispielsweise in Abhängigkeit von dem Nennstrom $I_N$ der Energieübertragungsanlage gemäß Figur 1 ermittelt werden. Beispielsweise kann gelten:

$$C = 0{,}025 \; * \; I_N$$

und

$$D = C/Ts = 25 \; * \; I_N$$

(z.B. für Ts = 0,001s).

Wird nun im Rahmen der Kurvenverlaufsprüfung 50 gemäß Figur 2 festgestellt, dass alle drei Leiterströme gleichzeitig das Kriterium für ein "flaches Gebiet" bzw. einen flachen Verlauf erfüllen, so wird in Block 60 ein Zählerwert Z um den Wert 1 erhöht, so dass im Falle eines erstmaligen Erkennens eines "flachen Gebietes" der Zählerwert Z nun 1 beträgt.

In einem Überprüfungsblock 70 wird nachfolgend geprüft, ob der Zählerwert Z bereits den Wert Z = 2 erreicht hat. Falls dies noch nicht der Fall ist, beispielsweise weil der Zählerwert Z erst Z = 1 beträgt, so wird gemäß der Verzweigung 80 auf den Eingang E zurück verzweigt und es werden die jeweils nächsten Stromabtastwerte herangezogen. Um diese nächsten Stromabtastwerte von den bereits berücksichtigten Stromabtastwerten unterscheiden zu können, werden diese mit dem Zählindex (n+1) weiterbehandelt.

Nachfolgend werden diese nächsten Stromabtastwerte $i_A(n+1)$, $i_B(n+1)$ und $i_C(n+1)$ ebenfalls der Kurvenverlaufsprüfung 50 unterzogen, und es wird geprüft, ob die Leiterströme an der Messstelle 15 des Abschnitts 10 gemäß Figur 1 ebenfalls einen flachen Verlauf aufweisen. Falls dies der Fall ist, so wird der Zählerwert Z in Block 60 wiederum um 1 erhöht, so dass er den Zählerwert Z = 2 annimmt.

In dem Überprüfungsblock 70 wird nun festgestellt, dass der Zählerwert Z den Wert 2 angenommen hat, so dass diesmal nicht entlang der Verzweigung 80 zurück verzweigt wird, sondern entlang der Verzweigung 90 zu einem Abfrageblock 100 gesprungen wird.

In dem Abfrageblock 100 wird geprüft, ob der Zählerwert Z seinen Zählerstand Z = 2 innerhalb der letzten Auswertperiode basierend auf aufeinander folgenden Abtastwerten mit aufeinander folgenden Indizes n und (n+1) angenommen hat. Falls dies der Fall ist, so wird in Block 110 auf einen Einschaltvorgang erkannt und es wird ein Blockiersignal SB erzeugt, das das Erzeugen eines Fehlersignals F am Ausgang des Feldgerätes 30 gemäß Figur 1 blockiert.

Wird in dem Abfrageblock 100 stattdessen festgestellt, dass der Zählerwert Z=2 nicht auf aufeinander folgende Abtastzyklen n und (n+1) zurückgeht, so wird gemäß einer Verzweigung 120 der Zählerwert Z zurück auf Null gesetzt und es wird gemäß der Verzweigung 130 zu dem Eingang E zurück verzweigt.

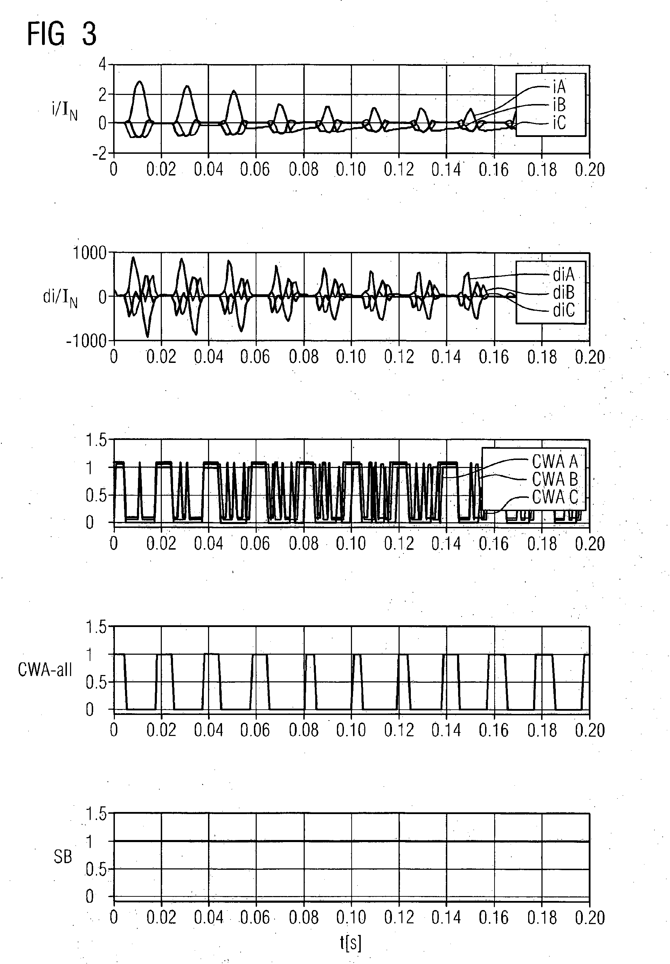

In der Figur 3 sind beispielhaft Leiterströme an der Messstelle 15 des Abschnitts 10 gemäß Figur 1 gezeigt. Man erkennt die Stromabtastwerte $i_A$, $i_B$ und $i_C$, deren Ableitungen $di_A$, $di_B$ und $di_C$, sowie daraus abgeleitete phasenindividuelle Blockiersignale CWAA, CWAB und CWAC.

Darüber hinaus ist die UND-Verknüpfung der drei Blockiersignale CWAA, CWAB und CWAC dargestellt und mit dem Bezugszeichen CWA-all bezeichnet. Nur wenn alle drei phasenindividuellen Blockiersignale CWAA, CWAB und CWAC gleichzeitig eine logische 1 aufweisen und demgemäß die UND-Verknüpfung CWA-all innerhalb einer Periodendauer des Stromes gleichzeitig eine logische 1 aufweist, so wird das Blockiersignal SB erzeugt.

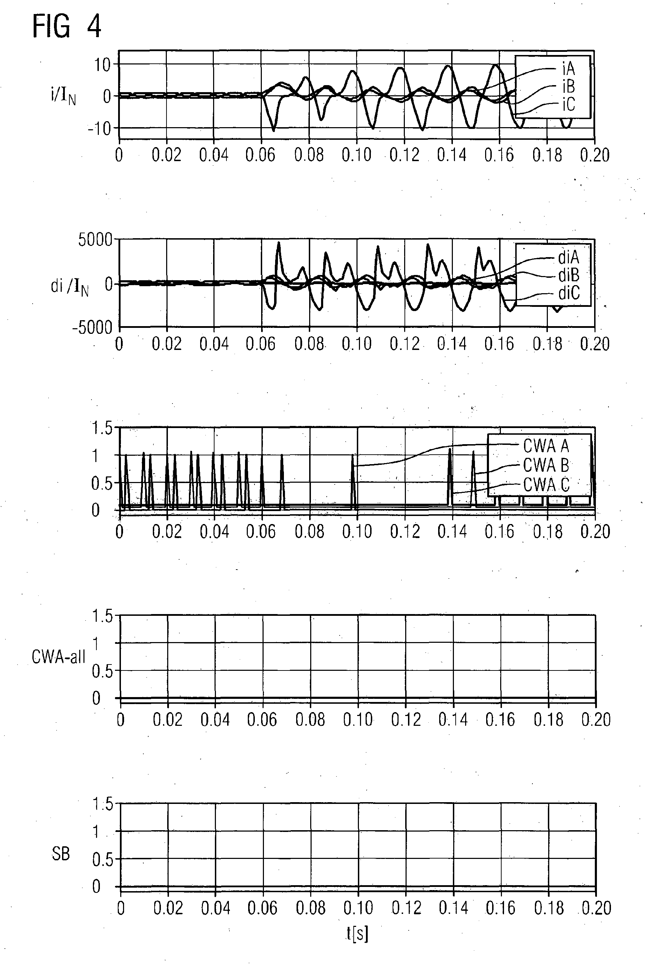

Die Arbeitsweise des Prüfverfahrens gemäß Figur 2 ist darüber hinaus in der Figur 4 dargestellt, jedoch nicht für einen Einschaltvorgang, sondern für den Fall eines inneren Fehlers auf der Oberspannungsseite eines Transformators. Man erkennt, dass zwar einzelne der Phasenleiterströme gelegentlich flache Gebiete aufweisen, so dass es zu der Erzeugung phasenindividueller Blockiersignale CWAA, CWAB, CWAC kommt, jedoch treten diese niemals zeitgleich auf, so dass die UND-Verknüpfung der phasenindividuellen Blockiersignale CWA-all nie eine logische "1" aufweist, sondern stets eine logische "0". Demgemäß wird auch kein Blockiersignal SB am Ausgang der Auswerteinrichtung 40 erzeugt.

Bei den oben aufgeführten Gleichungen (1) bis (3) wurde von einem konstanten Schwellenwert für die Kurvenverlaufsprüfung 50 gemäß Figur 2 ausgegangen. Alternativ können auch variable Schwellenwerte oder adaptive Schwellenwerte herangezogen werden, oder es kann zusätzlich die jeweilige Stromhöhe des Leiterstroms berücksichtigt werden.

Eine Kurvenverlaufsprüfung 50 gemäß Figur 2 auf der Basis eines kowstanten Schwellenwerts für die Ableitung des Stroms sowie auf der Basis einer zusätzlichen Prüfung der absoluten Stromhöhe kann beispielsweise anhand der folgenden Gleichungen durchgeführt werden:

$$i_A(n) \leq Dc \quad \& \quad i_B(n) \leq Dc \quad \& \quad i_C(n) \leq Dc$$

und

$$di_A(n) \leq Dd \quad \& \quad di_B(n) \leq Dd \quad \& \quad di_C(n) \leq Dd$$

Die Schwellenwerte Dc und Dd können beispielsweise betragen:

$$Dc = 0,5 * I_N$$

und

$$Dd = 30 * I_N$$

Auch können variable Schwellenwerte Dc und Dd verwendet werden, beispielsweise bezogen auf die Amplitude eines gemessenen Leiter- oder Differenzstromes Id. So kann beispielsweise gelten:

$$Dc = 0,2 * Id(n)$$

und

$$Dd \;\; = \;\; 0,2 \;\; * \;\; Dc \;\; * \;\; 2 \;\; \pi \;\; f_1 \;\; \approx \;\; 12,5 \;\; * \;\; Id(n)$$

Auch können die Schwellenwerte adaptiv nachgeregelt werden, zum Beispiel anhand der jeweiligen Stromhöhe bzw. an diese angepasst. Beispielsweise kann ein Erzeugen eines phasenleiterindividuellen Blockiersignals nur dann erfolgen, wenn für den Phasenleiterstrom eine oder beide der folgenden Bedingungen erfüllt sind:

$$\left| i_{A,B,C}(n) \right| < 0.3 \cdot \max_{k=0\ldots N-1} \left| i_{A,B,C}(n-k) \right|$$

$$\left| di_{A,B,C}(n) \right| < 0.3 \cdot \left| i_{A,B,C}(n) \right| 2\pi f_1$$

Die beiden letzten Gleichungen kann man sprachlich beispielsweise wie folgt zusammenfassen: "Ist der aktuelle Abtastwert kleiner als das 0,3-fache des größten Abtastwerts der letzten Periode, dann überprüfe, ob die Ableitung des Stromes bezogen auf den aktuellen Abtastwert klein genug ist. Falls dies der Fall ist, so liegt ein flaches Gebiet vor."

Bei der Erläuterung der Arbeitsweise der Auswerteinrichtung 40 gemäß Figur 1 wurde beispielhaft davon ausgegangen, dass ein Blockiersignal SB nur dann erzeugt werden soll, wenn alle drei Leiterströme gleichzeitig einen flachen Verlauf aufweisen. Alternativ kann das Blockiersignal SB auch dann erzeugt werden, wenn der Nullstrom, ein Sternpunktstrom oder nur einer der Phasenleiterströme einen flachen Verlauf aufweist. Die Auswahl, welche der in der Energieübertragungsanlage fließenden Ströme herangezogen werden sollen, kann an die individuelle Ausgestaltung der jeweiligen Energieübertragungsanlage angepasst werden.

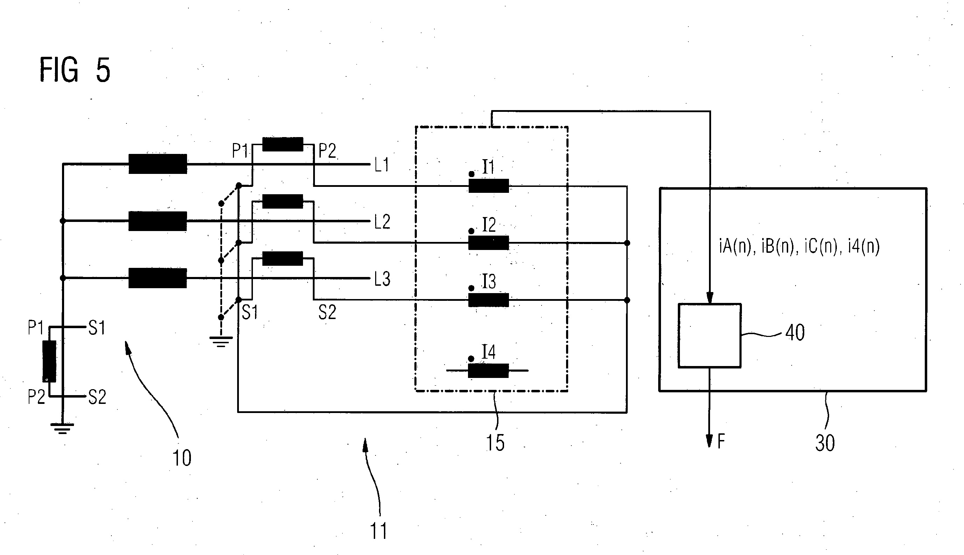

In der Figur 5 ist ein weiteres Ausführungsbeispiel für eine Energieübertragungsanlage gezeigt. Bei dem Ausführungsbeispiel gemäß Figur 5 wird zusätzlich zu den Phasenleiterströmen auch noch der Sternpunktstrom eines Transformators gemessen; dieser ist mit dem Bezugzeichen I4 bezeichnet. Der Auswerteinrichtung 40 stehen somit nicht nur die Phasenleiterströme, sondern zusätzlich auch der Sternpunktstrom bzw. deren Abtastwerte $i_A(n)$, $i_B(n)$, $i_C(n)$ und $i_4(n)$ zur Verfügung.

Bei der Ausgestaltung gemäß Figur 5 kann ein Blockieren des Schutzgerätes bzw. ein Erzeugen des Blockiersignals SB beispielsweise bereits erfolgen, wenn nur der Sternpunktstrom I4 allein oder der Sternpunktstrom I4 zusammen mit einem oder zwei Phasenleiterströmen einen flachen Verlauf aufweist. Die Prüfung, ob der Sternpunktstrom flach verläuft oder nicht, kann beispielsweise durchgeführt werden, wie dies oben, insbesondere im Zusammenhang mit der Figur 2 und im Zusammenhang mit den obigen Gleichungen erläutert wurde.

**Patentansprüche**

1. Verfahren zum Erzeugen eines Fehlersignals (F), das einen Fehler in einer Energieübertragungsanlage (11) anzeigt, wobei im Rahmen des Verfahrens

   - geprüft wird, ob in der Energieübertragungsanlage ein Einschaltvorgang durchgeführt wird, und
   - das Erzeugen des Fehlersignals blockiert wird, solange der Einschaltvorgang anhält,
   **dadurch gekennzeichnet, dass**
   - geprüft wird, ob zumindest ein Strom (I1, I2, I3, I4) der dreiphasigen Energieübertragungsanlage für ein vorgegebenes Mindestzeitintervall pro Periodendauer des Stromes einen flachen Stromverlauf aufweist, und
   - das Erzeugen des Fehlersignals blockiert wird, wenn der zumindest eine Strom für das vorgegebene Mindestzeitintervall einen flachen Stromverlauf aufweist.

2. Verfahren nach Anspruch 1,
   **dadurch gekennzeichnet, dass**

   - an einer vorgegebenen Messstelle der Leiterstrom in jeder Phase einer dreiphasigen Leitung gemessen wird,
   - geprüft wird, ob alle drei Leiterströme gleichzeitig für ein vorgegebenes Mindestzeitintervall pro Periodendauer des Stromes gleichzeitig einen flachen Stromverlauf aufweisen, und
   - das Erzeugen des Fehlersignals blockiert wird, wenn alle drei Leiterströme für das vorgegebene Mindestzeitintervall gleichzeitig einen flachen Stromverlauf aufweisen.

3. Verfahren nach Anspruch 1 oder 2,
**dadurch gekennzeichnet, dass**
das Erzeugen des Fehlersignals nur blockiert wird, wenn alle drei Ströme für das vorgegebene Mindestzeitintervall gleichzeitig einen flachen Stromverlauf aufweisen und außerdem eine weitere Blockierbedingung erfüllt wird.

4. Verfahren nach einem der voranstehenden Ansprüche,
**dadurch gekennzeichnet, dass**
das Erzeugen des Fehlersignals nur blockiert wird, wenn alle drei Ströme sowie ein Sternpunktstrom (I4) der Energieübertragungsanlage für das vorgegebene Mindestzeitintervall gleichzeitig einen flachen Stromverlauf aufweisen.

5. Verfahren nach einem der voranstehenden Ansprüche,
dadurch gekenntzeichnet, dass
das Erzeugen des Fehlersignals nur blockiert wird, wenn alle drei Ströme für das vorgegebene Mindestzeitintervall gleichzeitig einen flachen Stromverlauf aufweisen und außerdem die Leiterströme jeweils einen vorgegebenen Stromschwellenwert (Dc) überschreiten.

6. Verfahren nach einem der voranstehenden Ansprüche,
**dadurch gekennzeichnet, dass**
der Stromverlauf als flach angesehen wird, wenn dessen zeitliche Änderung ($di_{A,B,C}$) während des vorgegebenen Mindestzeitintervalls kleiner als ein Änderungsschwellenwert (Dd) ist.

7. Verfahren nach einem der vorangehenden Ansprüche 2-5,
**dadurch gekennzeichnet, dass**
der Stromschwellenwert und/oder der Änderungsschwellenwert fest vorgegebenen wird.

8. Verfahren nach einem der vorangehenden Ansprüche,
**dadurch gekennzeichnet, dass**
der Stromschwellenwert und/oder der Änderungsschwellenwert variabel ist und in Abhängigkeit von zumindest einem an der Energieübertragungsanlage gemessenen Messwert ermittelt wird.

9. Verfahren nach einem der vorangehenden Ansprüche,
**dadurch gekennzeichnet, dass**
der Stromschwellenwert und/oder der Änderungsschwellenwert in Abhängigkeit von zumindest einem gemessenen Bezugsstrommesswert (Id, $\max\limits_{k=0...N-1} \left| i_{A,B,C}(n-k) \right|$ ) festgelegt wird.

10. Verfahren nach Anspruch 9,
**dadurch gekennzeichnet, dass**
der Stromschwellenwert und/oder der Änderungsschwellenwert umso größer gewählt wird, je größer der Bezugsstrommesswert ist.

11. Verfahren nach einem der vorangehenden Ansprüche 9-10, **dadurch gekennzeichnet, dass**
pro Phase jeweils ein phasenleiterindividueller Stromschwellenwert und/oder Änderungsschwellenwert bestimmt und angewandt wird, wobei jeder der phasenleiterindividuellen Stromschwellenwerte und/oder Änderungsschwellenwerte jeweils in Abhängigkeit von einem Bezugsstrommesswert der jeweiligen Phase bestimmt wird.

12. Verfahren nach einem der vorangehenden Ansprüche 9-11, **dadurch gekennzeichnet, dass**
als der Bezugsstrommesswert der maximale Stromwert $\left( \max\limits_{k=0...N-1} \left| i_{A,B,C}(n-k) \right| \right)$ gewählt wird, der in einem zeitlich vorher liegenden Bezugszeitintervall gemessen worden ist.

13. Verfahren nach einem der vorangehenden Ansprüche 9-12, **dadurch gekennzeichnet, dass**
als Stromschwellenwert und/oder Änderungsschwellenwert ein zu dem Bezugsstrommesswert proportionaler Wert gewählt wird.

14. Verfahren nach einem der vorangehenden Ansprüche,

7

**dadurch gekennzeichnet, dass**
das Erzeugen des Fehlersignals blockiert wird, wenn alle drei Leiterströme eines Transformators für das vorgegebene Mindestzeitintervall gleichzeitig einen flachen Stromverlauf aufweisen.

15. Verfahren nach einem der vorangehenden Ansprüche,
**dadurch gekennzeichnet, dass**
das Erzeugen des Fehlersignals blockiert wird, wenn alle drei Leiterströme eines Transformators mit geerdetem Sternpunkt sowie zusätzlich auch der Sternpunktstrom des Transformators für das vorgegebene Mindestzeitintervall gleichzeitig einen flachen Stromverlauf aufweisen.

16. Feldgerät (30), insbesondere Schutzgerät, zum Anschluss an eine Leitung einer dreiphasigen Energieübertragungsanlage (11) und zum Erzeugen eines Fehlersignals (F), das einen Fehler in einer dreiphasigen Energieübertragungsanlage anzeigt, wobei das Feldgerät eine Auswerteinrichtung (40) aufweist, die geeignet ist, ein Verfahren nach einem der voranstehenden Ansprüche 1-15 auszuführen.

17. Feldgerät nach Anspruch 16, **dadurch gekennzeichnet, dass** die Auswerteinrichtung eine Datenverarbeitungsanlage aufweist, die derart programmiert ist, dass sie ein Verfahren nach einem der voranstehenden Ansprüche 1-15 ausführen kann.

**Claims**

1. Method for generating an error signal (F) which indicates an error in a power transmission system (11), wherein, as part of the method,

   - a check is carried out in order to determine whether a switch-on operation is being carried out in the power transmission system, and
   - the generation of the error signal is blocked as long as the switch-on operation continues,
   **characterized in that**
   - a check is carried out in order to determine whether at least one current (I1, I2, I3, I4) of the three-phase power transmission system has a flat current profile for a predefined minimum interval of time per period duration of the current, and
   - the generation of the error signal is blocked if the at least one current has a flat current profile for the predefined minimum interval of time.

2. Method according to Claim 1,
   **characterized in that**

   - the conductor current in each phase of a three-phase line is measured at a predefined measuring point,
   - a check is carried out in order to determine whether all three conductor currents simultaneously have a flat current profile for a predefined minimum interval of time per period duration of the current, and
   - the generation of the error signal is blocked if all three conductor currents simultaneously have a flat current profile for the predefined minimum interval of time.

3. Method according to Claim 1 or 2,
   **characterized in that**
   the generation of the error signal is blocked only if all three currents simultaneously have a flat current profile for the predefined minimum interval of time and a further blocking condition is also met.

4. Method according to one of the preceding claims,
   **characterized in that**
   the generation of the error signal is blocked only if all three currents as well as a star point current (I4) of the power transmission system simultaneously have a flat current profile for the predefined minimum interval of time.

5. Method according to one of the preceding claims,
   **characterized in that**
   the generation of the error signal is blocked only if all three currents simultaneously have a flat current profile for the predefined minimum interval of time and the conductor currents also each exceed a predefined current threshold value (Dc).

6. Method according to one of the preceding claims,
**characterized in that**
the current profile is considered to be flat if its temporal change ($di_{A,B,C}$) is smaller than a change threshold value (Dd) during the predefined minimum interval of time.

7. Method according to one of the preceding Claims 2-5,
**characterized in that**
the current threshold value and/or the change threshold value is/are permanently predefined.

8. Method according to one of the preceding claims,
**characterized in that**
the current threshold value and/or the change threshold value is/are variable and is/are determined on the basis of at least one measured value measured in the power transmission system.

9. Method according to one of the preceding claims,
**characterized in that**
the current threshold value and/or the change threshold value is/are defined on the basis of at least one measured reference current value (Id, $\max\limits_{k=0...N-1}\left|i_{A,B,C}(n-k)\right|$ ) which has been measured.

10. Method according to Claim 9,
**characterized in that**
the current threshold value and/or the change threshold value is/are selected to be larger, the larger the measured reference current value.

11. Method according to one of the preceding Claims 9-10,
**characterized in that**
a phase-conductor-specific current threshold value and/or change threshold value is/are respectively determined and used for each phase, each of the phase-conductor-specific current threshold values and/or change threshold values respectively being determined on the basis of a measured reference current value of the respective phase.

12. Method according to one of the preceding Claims 9-11,
**characterized in that**

the maximum current value ( $\max\limits_{k=0...N-1}\left|i_{A,B,C}(n-k)\right|$ ) which has been measured in an earlier reference interval of time is selected as the measured reference current value.

13. Method according to one of the preceding Claims 9-12,
**characterized in that**
a value proportional to the measured reference current value is selected as the current threshold value and/or change threshold value.

14. Method according to one of the preceding claims,
**characterized in that**
the generation of the error signal is blocked if all three conductor currents of a transformer simultaneously have a flat current profile for the predefined minimum interval of time.

15. Method according to one of the preceding claims,
**characterized in that**
the generation of the error signal is blocked if all three conductor currents of a transformer with a grounded star point and additionally also the star point current of the transformer simultaneously have a flat current profile for the predefined minimum interval of time.

16. Field device (30), in particular a protective device, for connection to a line of a three-phase power transmission system (11) and for generating an error signal (F) which indicates an error in a three-phase power transmission system, the field device having an evaluation device (40) which is suitable for carrying out a method according to one of the preceding Claims 1-15.

17. Field device according to Claim 16, **characterized in that** the evaluation device has a data processing system which is programmed in such a manner that it can carry out a method according to one of the preceding Claims 1-15.

**Revendications**

1. Procédé de production d'un signal ( F ) de défaillance, qui indique une défaillance dans une installation ( 11 ) de transport d'électricité, dans lequel, dans le cadre du procédé

   - on vérifie si on effectue une opération de connexion dans l'installation de transport d'électricité et
   - on bloque la production du signal de défaillance tant que dure l'opération de connexion,
   **caractérisé en ce que**
   - on contrôle si au moins un courant ( I1, I2, I3, I4 ) de l'installation de transport d'électricité triphasée a, pendant un intervalle de temps minimum donné à l'avance, par période du courant, une courbe du courant qui est plate et
   - on bloque la production du signal de défaillance si le au moins un courant a une courbe du courant qui est plate pendant l'intervalle de temps minimum donné à l'avance.

2. Procédé suivant la revendication 1,
   **caractérisé en ce que**

   - on mesure en un point de mesure donné à l'avance le courant de phase dans chaque phase d'une ligne triphasée,
   - on contrôle si tous les trois courants de phase ont, en même temps pendant un intervalle de temps minimum donné à l'avance, par période du courant, en même temps une courbe du courant qui est plate et
   - on bloque la production du signal de défaillance si tous les trois courants de phase ont, pendant l'intervalle de temps minimum donné à l'avance, en même temps une courbe du courant qui est plate.

3. Procédé suivant la revendication 1 ou 2,
   **caractérisé en ce que**
   on bloque la production du signal de défaillance, seulement si tous les trois courants ont, pendant l'intervalle de temps minimum donné à l'avance, en même temps une courbe du courant qui est plate et s'il est satisfait en outre à une autre condition de blocage.

4. Procédé suivant l'une des revendications précédentes,
   **caractérisé en ce que**
   on bloque la production du signal de défaillance seulement si tous les trois courants ainsi qu'un courant ( 14 ) de point neutre de l'installation de transport d'électricité a, pendant l'intervalle de temps minimum donné à l'avance, en même temps une courbe du courant qui est plate.

5. Procédé suivant l'une des revendications précédentes,
   **caractérisé en ce que**
   on bloque la production du signal de défaillance seulement si tous les trois courants ont, pendant l'intervalle de temps minimum donné à l'avance, en même temps une courbe du courant qui est plate et si en outre les courants de phase dépassent respectivement une valeur ( Dc ) de seuil de courant donnée à l'avance.

6. Procédé suivant l'une des revendications précédentes,
   **caractérisé en ce que**
   on considère la courbe du courant comme plate si sa variation ($di_{A,B,C}$) dans le temps est, pendant l'intervalle de temps minimum donné à l'avance, plus petite qu'une valeur ( Dd ) de seuil de variation.

7. Procédé suivant l'une des revendications précédentes 2 à 5,
   **caractérisé en ce que**
   la valeur de seuil du courant et/ou la valeur de seuil de la variation est donnée à l'avance d'une manière fixe.

8. Procédé suivant l'une des revendications précédentes,

**caractérisé en ce que**
la valeur de seuil du courant et/ou la valeur de seuil de la variation est variable et est déterminée en fonction d'au moins une valeur de mesure mesurée sur l'installation de transport d'électricité.

9. Procédé suivant l'une des revendications précédentes,
**caractérisé en ce que**
on fixe la valeur de seuil du courant et/ou la valeur de seuil de la variation en fonction d'au moins une valeur (Id,

$$\max_{k=0\ldots N-1} \left| i_{A,B,C}(n-k) \right| )$$ de mesure du courant de référence, qui est mesurée.

10. Procédé suivant la revendication 9,
**caractérisé en ce que**
on choisit la valeur de seuil du courant et/ou la valeur de seuil de la variation d'autant plus grande que la valeur de mesure du courant de référence est plus grande.

11. Procédé suivant l'une des revendications précédentes 9 à 10,
**caractérisé en ce que**
on définit et on applique par phase respectivement une valeur de seuil du courant et/ou une valeur de seuil de la variation individuellement pour chaque ligne de phase, chaque valeur de seuil du courant et/ou chaque valeur de seuil de la variation individuelle pour chaque ligne de phase étant définie respectivement en fonction d'une valeur de mesure du courant de référence de la phase respective.

12. Procédé suivant l'une des revendications précédentes 9 à 11,
**caractérisé en ce que**

on choisit comme valeur de mesure du courant de référence la valeur $( \max_{k=0\ldots N-1} \left| i_{A,B,C}(n-k) \right| )$ maximum du courant, qui a été mesurée dans un intervalle de temps de référence précédent dans le temps.

13. Procédé suivant l'une des revendications précédentes 9 à 12,
**caractérisé en ce que**
on choisit comme valeur de seuil du courant et/ou comme valeur de seuil de la variation une valeur proportionnelle à la valeur de mesure du courant de référence.

14. Procédé suivant l'une des revendications précédentes,
**caractérisé en ce que**
on bloque la production du signal de défaillance si tous les trois courants de phase d'un transformateur ont, pendant l'intervalle de temps minimum donné à l'avance, en même temps une courbe de courant qui est plate.

15. Procédé suivant l'une des revendications précédentes,
**caractérisé en ce que**
on bloque la production du signal de défaillance si tous les trois courants de phase d'un transformateur à point neutre mis à la terre ainsi qu'en outre également le courant de point neutre du transformateur ont, pendant l'intervalle de temps minimum donné à l'avance, en même temps une courbe de courant qui est plate.

16. Appareil (30) de terrain, notamment appareil de protection, pour le raccordement à une ligne d'une installation (11) de transport d'électricité triphasée et pour la production d'un signal ( F ) de défaillance, qui indique une défaillance dans une installation de transport d'électricité triphasée, l'appareil de terrain ayant un dispositif ( 40 ) d'exploitation qui est propre à effectuer un procédé suivant l'une des revendications précédentes 1 à 15.

17. Appareil de terrain suivant la revendication 16,
**caractérisé en ce que**
le dispositif d'exploitation a une installation de traitement de données, qui est programmée de manière à pouvoir effectuer un procédé suivant l'une des revendications précédentes 1 à 15.

FIG 1

iA(n), iB(n), iC(n)

40

30

F

I1

I2

I3

15

L1

L2

L3

P2

P1

S2

S1

11

10

S1

S2

P1

P2

## FIG 2

E — ↓ iA(n), iB(n), iC(n)

130

$n=n+1$

80

50

Nein ← flaches Gebiet ? → Ja

60 — $Z=Z+1$

120

$Z=0$

90 — Ja ← $Z=2$ ? → Nein

70

100

Nein ← $Z=2$ innerhalb der letzten Periode ?

Ja ↓

110 — Blockieren → SB

# FIG 3

# FIG 4

FIG 5

$iA(n), iB(n), iC(n), i4(n)$

30

40

F

15

I1

I2

I3

I4

L1

L2

L3

P2

P1

S2

S1

11

10

S1

S2

P1

P2